# EUROPEAN PATENT APPLICATION

(11) **EP 4 524 961 A1**
(43) Date of publication of application: **19.03.2025**
(21) Application number: 23802771.8
(22) Date of filing: 05.05.2023
(51) Int. Cl.: G10L 21/0272

(54) **AUDIO PROCESSING METHOD AND APPARATUS, DEVICE AND STORAGE MEDIUM**

(30) Priority: 07.05.2022 CN 202210495460
(71) Applicant: Beijing Zitiao Network Technology Co., Ltd., Beijing 100190 (CN)
(72) Inventor: LIN, Hao, Beijing 100028 (CN); LIU, Wenwu, Beijing 100028 (CN); HUANG, Hao, Beijing 100028 (CN); HUANG, Jin, Beijing 100028 (CN)
(74) Representative: Dentons UK and Middle East LLP
(86) International application number: PCT/CN2023/092363
(87) International publication number: WO 2023/216999

(57) **Abstract**

The present disclosure provides an audio processing method and apparatus, a device, and a storage medium. The method includes: acquiring, in response to an audio acquisition instruction, to-be-processed audio; performing, in response to an audio extraction instruction for the to-be-processed audio, audio extraction on the to-be-processed audio, to obtain target audio, where the target audio is a vocal and/or an accompaniment extracted from the to-be-processed audio; and presenting the target audio.

## Description

### CROSS-REFERENCE TO RELATED APPLICATIONS

This application claims priority to Chinese patent application No. 202210495460.0, entitled "AUDIO PROCESSING METHOD, APPARATUS, DEVICE AND STORAGE MEDIUM" and filed with the China National Intellectual Property Administration on May 07, 2022, which is incorporated herein by reference in its entirety.

### TECHNICAL FIELD

The present application relates to the field of information processing technologies and, in particular, to an audio processing method and apparatus, a device and a storage medium.

### BACKGROUND

With the continuous development of computer technologies and the continuous growth of people's demands in personalities, more and more users are not satisfied with the unchanging media creation style, and hope to create media content with their own styles. Audio editing is a typical way for users to edit media content to create stylized media content.

The existing audio editing functions are limited and cannot meet the diverse and personalized media creation needs of users. Therefore, it is urgent to expand different audio editing functions to meet the diverse and personalized needs of users.

### SUMMARY

Embodiments of the present application provide an audio processing method and apparatus, a device and a storage medium, to improve the diversification of audio editing functions to meet personalized needs of users.

In a first aspect, an embodiment of the present disclosure provides an audio processing method, including:
acquiring, in response to an audio acquisition instruction, to-be-processed audio;
performing, in response to an audio extraction instruction for the to-be-processed audio, audio extraction on the to-be-processed audio, to obtain target audio, where the target audio is a vocal and/or an accompaniment extracted from the to-be-processed audio;
presenting the target audio.

In a second aspect, an embodiment of the present disclosure provides an audio processing apparatus, including:
an acquiring module, configured to acquire, in response to an audio acquisition instruction, to-be-processed audio;
a processing module, configured to perform, in response to an audio extraction instruction for the to-be-processed audio, audio extraction on the to-be-processed audio, to obtain target audio, where the target audio is a vocal and/or an accompaniment extracted from the to-be-processed audio; and
a presenting module, configured to present the target audio.

In a third aspect, an embodiment of the present disclosure provides an electronic device, including: a processor and a memory;
the memory stores a computer-executed instruction; and;
the processor executes the computer-executed instruction stored in the memory, to cause the at least one processor to execute the audio processing method described in the above first aspect and various possible designs of the first aspect.

In a fourth aspect, an embodiment of the present disclosure provides a computer-readable storage medium, where a computer-executed instruction is stored in the computer-readable storage medium, and when the computer-executed instruction is executed by a processor, the audio processing method described in the above first aspect and various possible designs of the first aspect is implemented.

In a fifth aspect, an embodiment of the present disclosure provides a computer program product, including a computer program, where when the computer program is executed by a processor, the audio processing method described in the above first aspect and various possible designs of the first aspect is implemented.

In a sixth aspect, an embodiment of the present disclosure provides a computer program, where when the computer program is executed by a processor, the audio processing method described in the above first aspect and various possible designs of the first aspect is implemented.

### BRIEF DESCRIPTION OF DRAWINGS

The accompanying drawings, which are incorporated in and constitute a part of this specification, illustrate embodiments consistent with the disclosure and together with the description serve to describe the principles of the disclosure.
FIG. 1 is a schematic flowchart of an audio processing method provided by an embodiment of the present disclosure.
FIG. 2 is a schematic flowchart of another audio processing method provided by an embodiment of the present disclosure.
FIG. 3 is a schematic diagram of an interface of audio processing provided by an embodiment of the present disclosure.
FIG. 4 is a schematic diagram of another interface of audio processing provided by an embodiment of the present disclosure.
FIG. 5 is a schematic diagram of yet another interface of audio processing provided by an embodiment of the present disclosure.
FIG. 6 is a schematic diagram of yet another interface of audio processing provided by an embodiment of the present disclosure.
FIG. 7 is a schematic flowchart of yet another audio processing method provided by an embodiment of the present disclosure.
FIG. 8 is a schematic flowchart of yet another audio processing method provided by an embodiment of the present disclosure.
FIG. 9 is a schematic diagram of an implementation principle of accompaniment extraction provided by an embodiment of the present disclosure.
FIG. 10 is a schematic diagram of an implementation principle of saving an audio file provided by an embodiment of the present disclosure.
FIG. 11 is a schematic structural diagram of an audio processing apparatus provided by an embodiment of the present disclosure.
FIG. 12 is a structural block diagram of an electronic device provided by an embodiment of the present disclosure.

### DESCRIPTION OF EMBODIMENTS

To make the objectives, technical solutions and advantages of embodiments of the present disclosure clearer, in the following, the technical solutions in the embodiments of the present disclosure will be clearly and comprehensively described with reference to the accompanying drawings in the embodiments of the present disclosure. Apparently, the described embodiments are some but not all of the embodiments of the present disclosure. All other embodiments obtained by persons of ordinary skill in the art based on the embodiments in the present disclosure without paying creative efforts shall fall within the protection scope of the present disclosure.

Embodiments of the present disclosure aim at the problem that the existing audio editing functions cannot meet the needs of users for diversified and personalized audio production, and propose an audio processing method. With this method, not only extraction processing on audio, for example, extraction of a vocal and/or an accompaniment, can be performed, but also the extracted vocal and/or accompaniment can be presented to a user for audition, storage, sharing or post-processing, thus diverse needs of the user can be met and the user experience is improved.

The technical solution provided by the embodiments of the present disclosure can be applied to a scenario where an electronic device processes audio. The electronic device here may be any device having an audio processing function, and may be a terminal device, or a server or a virtual machine, etc., or may be a distributed computer system composed of one or more servers and/or computers, etc. The terminal device here includes but is not limited to a smart phone, a notebook computer, a desktop computer, a platform computer, a vehicle-mounted device, a smart wearable device, a smart screen, etc., which is not limited in the embodiments of the present disclosure. The server may be an ordinary server or a cloud server. The cloud server is also called a cloud computing server or a cloud host, and is a host product in a cloud computing service system. The server here may also be a server of a distributed system, or a server combined with a blockchain.

It is worth noting that product implementation of the present disclosure is in a form of a program code included in a platform software and deployed on an electronic device (or hardware having computing capabilities, such as a computing cloud or a mobile terminal). Illustratively, the program code of the present disclosure may be stored inside the electronic device. At runtime, the program code runs in a host memory and/or a GPU memory of the electronic device.

In the embodiments of the present disclosure, "multiple" means two or more. "And/or" describes the association relationship of associated objects, indicating that there may be three types of relationships. For example, A and/or B may indicate: A exists alone, A and B exist simultaneously, and B exists alone. The character "/" generally indicates that the contextual objects are in an "or" relationship.

In the following, the technical solution of the present disclosure will be described in detail through specific embodiments. It should be noted that the following specific embodiments may be combined with each other, and the same or similar concepts or processes may not be repeated in some embodiments.

Embodiments of the present disclosure provide an audio processing method and apparatus, a device, and a storage medium. By acquiring, in response to an audio acquisition instruction, to-be-processed audio, performing, in response to an audio extraction instruction for the to-be-processed audio, audio extraction on the to-be-processed audio, to obtain target audio, where the target audio is a vocal and/or an accompaniment extracted from the to-be-processed audio, and presenting the target audio, the directly extracted vocal and/or accompaniment can be presented to a user for the user to play, save, share or process, etc., the diverse needs of users can be met and the user experience is improved.

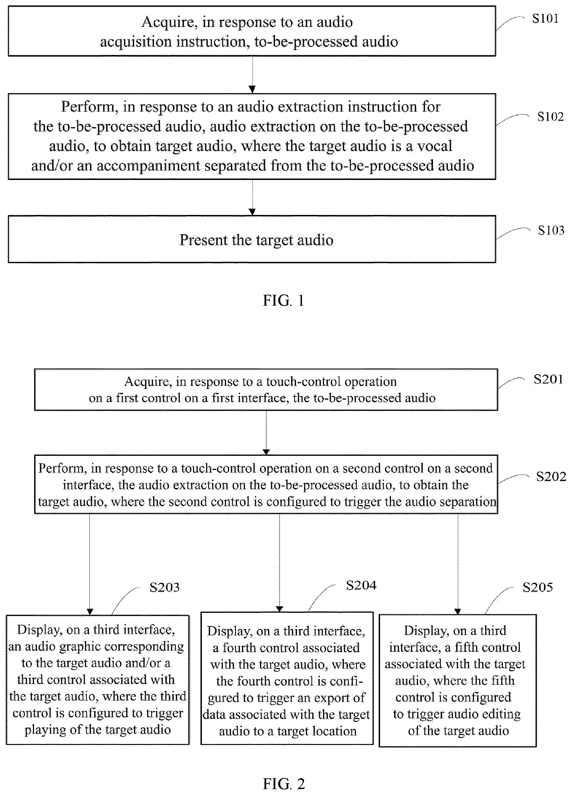

Illustratively, FIG. 1 is a schematic flowchart of an audio processing method provided by an embodiment of the present disclosure. The method is described by using an electronic device in FIG. 1 as an execution subject. As shown in FIG. 1, the audio processing method may include the following steps.

S101, acquire, in response to an audio acquisition instruction, to-be-processed audio.

In the embodiment of the present disclosure, when a user uses the electronic device to process audio, the audio acquisition instruction may be sent to the electronic device, so that the electronic device acquires the to-be-processed audio, in response to the acquired audio acquisition instruction.

Illustratively, the audio acquisition instruction may be sent by the user through a human-computer interaction interface of the electronic device, for example, by touch-controlling a control on the human-computer interaction interface, or by voice (in this case, the electronic device has controls with functions such as voice acquisition or playing), and there is no limit in this regards here.

Optionally, in response to the detected or received audio acquisition instruction, the electronic device may receive the to-be-processed audio from other devices, or read the to-be-processed audio from a database stored by itself (at this time, a database is deployed in the electronic device), or may fetch the to-be-processed audio from a cloud. The way of acquiring the to-be-processed audio is not limited in the embodiment of the present disclosure, and may be determined according to an actual scenario, and details are not described here.

It can be understood that in the embodiment of the present disclosure, the to-be-processed audio acquired by the electronic device may be preprocessed audio, for example, audio data obtained through audio extraction on an acquired target video by the electronic device, or may be unprocessed audio. There is no limit in this regards in the embodiment.

S102, perform, in response to an audio extraction instruction for the to-be-processed audio, audio extraction on the to-be-processed audio, to obtain target audio, where the target audio is a vocal and/or an accompaniment extracted from the to-be-processed audio.

Illustratively, after the electronic device acquires the to-be-processed audio, the user can send the audio extraction instruction to the electronic device, so that the electronic device, in response to the audio extraction instruction, performs the audio extraction on the to-be-processed audio and extracts the target audio from the to-be-processed audio, to obtain the vocal and/or the accompaniment extracted from the to-be-processed audio, that is, the target audio may be at least one of the vocal and the accompaniment.

Illustratively, the electronic device may acquire the audio extraction instruction sent by the user through the human-computer interaction interface, or may acquire the audio extraction instruction sent by the user by voice. There is no limit in this regards in the embodiment.

S103, present the target audio.

In the embodiment, after extracting the target audio from the to-be-processed audio, the electronic device can present the target audio for the user to play, save, share and/or process.

Illustratively, the electronic device may present the target audio on an interface of a target application on which controls operable by the user, such as a save control, a play control, a process control, and the like, are deployed. Optionally, the process control is configured to trigger the presentation of the target audio on a processing page. The processing page may be a page for performing audio processing. On this page, users can perform various audio editing and/or processing, and output final processing results.

In the audio processing method provided by the embodiment of the present disclosure, the to-be-processed audio is acquired in response to the audio acquisition instruction; in response to the audio extraction instruction for the to-be-processed audio, the audio extraction is performed on the to-be-processed audio to obtain the target audio, where the target audio is the vocal and/or the accompaniment extracted from the to-be-processed audio; and finally the target audio is presented. In this technical solution, by presenting the extracted target audio, that is, by using the solution which enables the accompaniment extraction result to be open and output to the user, the user can choose to play, save, share, process and perform other operations on the target audio according to the needs, the personalized needs of users are met and the user experience is improved.

In order to enable readers to have a deeper understanding of the implementation principles of the present disclosure, further refinements are now made in conjunction with the following embodiments.

Illustratively, on the basis of the foregoing embodiments, FIG. 2 is a schematic flowchart of another audio processing method provided by an embodiment of the present disclosure. As shown in FIG. 2, in an embodiment of the present disclosure, the audio processing method may include the following steps.

S201, acquire, in response to a touch-control operation on a first control on a first interface, the to-be-processed audio.

In the embodiment of the present disclosure, it is assumed that the to-be-processed audio is audio acquired by the electronic device in response to the user's touch-control operation on the first interface. That is, in this embodiment, the first interface is an interface for audio uploading.

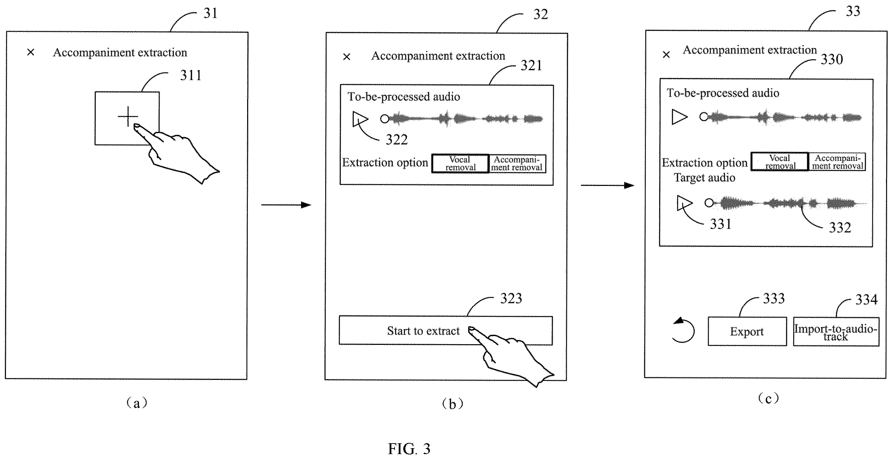

Illustratively, FIG. 3 is a schematic diagram of an interface for audio processing provided by an embodiment of the present disclosure. Referring to (a) of FIG. 3, assuming that a first interface 31 is an upload interface for accompaniment extraction, a first control 311 is deployed on the first interface 31, and is configured to trigger loading of audio. Therefore, in the embodiment, when the user touches the first control 311 on the first interface 31, such touch-control operation is detected by the electronic device, and in response to the touch-control operation on the first control 311, the electronic device acquires the to-be-processed audio from a local album and presents the to-be-processed audio on a second interface 32, as shown in (b) of FIG. 3.

It can be understood that the touch-control operation may also be interpreted as a press operation, a touch operation, or a click operation, etc. The press operation may be a long press, a short press, or a continuous press. The embodiment does not limit the specific meaning of the touch-control operation.

Illustratively, as shown in (b) of FIG. 3, after the to-be-processed audio is uploaded, a first area 321 on the second interface 31 not only includes the to-be-processed audio and a play control 322 configured to trigger the playing of the to-be-processed audio, but also includes a extraction option under the to-be-processed audio.

Optionally, the extraction option may include a vocal removal control and an accompaniment removal control. The vocal removal control is configured to trigger the removal of the vocal in the audio, and the accompaniment removal control is configured to trigger the removal of the accompaniment in the audio.

In a possible design of the embodiment, the extraction option may also include an accompaniment extraction control (not shown) which can be configured to trigger the extraction of various types of audio such as the vocal and the accompaniment etc. in the audio, to obtain the vocal and the accompaniment etc. in the audio. There is no limit in this regards in the embodiment.

S202, perform, in response to a touch-control operation on a second control on a second interface, the audio extraction on the to-be-processed audio, to obtain the target audio, where the second control is configured to trigger the audio extraction.

In the embodiment of the present disclosure, after acquiring the to-be-processed audio, the electronic device can perform the extraction operation on the to-be-processed audio, to obtain the target audio.

Illustratively, as shown in (b) of FIG. 3, on the second interface 32, a second control 323 configured to trigger the audio extraction is further included under the first area 321. Optionally, after the electronic device detects that the user selects the extraction option of the vocal removal control, if the user's touch-control operation on the second control 323 is also detected, the electronic device then performs, in response to the touch-control operation on the second control 323, audio extraction on the to-be-processed audio, to obtain an accompaniment with the vocal removed, as shown in (c) of FIG. 3.

It can be understood that, in the embodiment of the present disclosure, the first interface, the second interface, and subsequent interfaces represent different interfaces, and there is no sequence between them. Similarly, the first control, the second control, and subsequent controls also only represent different controls, and there is no sequence between them either. For example, the second control may be a first control on the second interface.

Illustratively, in a possible design of the embodiment of the present disclosure, the above S103 may be implemented through the following S203.

S203, display, on a third interface, an audio graphic corresponding to the target audio and/or a third control associated with the target audio, where the third control is configured to trigger playing of the target audio.

Illustratively, in this possible design of the embodiment, after obtaining the target audio, the electronic device can display the audio graphic corresponding to the target audio and/or the third control associated with the target audio on the third interface, so as to present the target audio to the user.

Illustratively, as shown in (c) of FIG. 3, a third interface 33 is an updated interface of the second interface 32, and a first area 330 of the third interface 33 may include the to-be-processed audio before the extraction processing and the target audio after the extraction processing.

Optionally, in the first area 330 in (c) of FIG. 3, there is a third control 331 configured to trigger the playing of the target audio and an audio graphic 332 corresponding to the target audio. For example, the audio graph 332 may be a waveform amplitude envelope graph of the target audio.

Correspondingly, when the user touch-controls the third control 331, the electronic device can play the target audio in response to the touch-control operation on the third control 331, and present the audio graphic 332 that changes with a waveform amplitude of the target audio.

Illustratively, in another possible design of the embodiment of the present disclosure, the above S103 may be implemented through the following S204.

S204, display, on a third interface, a fourth control associated with the target audio, where the fourth control is configured to trigger an export of data associated with the target audio to a target location.

The target location includes an album or a file system.

Illustratively, in this possible design of the embodiment, after obtaining the target audio, the electronic device may present the target audio to the user in a manner of displaying the fourth control associated with the target audio on the third interface.

Illustratively, as shown in (c) of FIG. 3, there is a fourth control 333 below the first area 330 on the third interface 33. Optionally, the fourth control 333 may be an export control, which is configured to trigger the export of the data associated with the target audio to the target location such as the album or the file system.

Correspondingly, when the user touch-controls the fourth control 333, the electronic device may export the target audio to the target position in response to the touch-control operation on the fourth control 333.

Illustratively, when the electronic device exports the target audio, the target audio may be exported to the target location in an audio format or in a file format. There is no limit in this regards in the embodiment.

Illustratively, in another possible design of the embodiment of the present disclosure, the above S103 may be implemented through the following S205.

S205, display, on a third interface, a fifth control associated with the target audio, where the fifth control is configured to trigger audio editing of the target audio.

Illustratively, in this possible design of the embodiment, after obtaining the target audio, the electronic device may also display the fifth control associated with the target audio on the third interface.

Illustratively, as shown in (c) of FIG. 3, there is a fifth control 334 below the first area 330 on the third interface 33. Optionally, the fifth control 334 can trigger the execution of audio editing of the target audio. For example, the fifth control 334 can be a control configured to import audio to an audio track, which is configured to trigger an import of the audio into a fourth interface (for example, an audio track interface) for audio editing.

Correspondingly, when the user touch-controls the fifth control 334, the electronic device may perform an audio editing operation on the target audio in response to the touch-control operation on the fifth control 334.

Optionally, in the embodiment, the audio editing may include one or more of the following: editing the audio to optimize the audio; extracting the vocal and/or the accompaniment from the audio; extracting the vocal from the audio, and mixing the extracted vocal with a preset accompaniment; and extracting the vocal from a first audio, extracting the accompaniment from a second audio, and mixing the extracted vocal with the extracted accompaniment.

Optionally, the embodiment does not limit the specific content of audio editing, which can be determined according to an actual situation, and details are not described here.

In the audio processing method provided in the embodiment, the to-be-processed audio is acquired in response to the touch-control operation on the first control on the first interface and the audio extraction is performed, in response to the touch-control operation on the second control on the second interface, on the to-be-processed audio to obtain the target audio, where the second control is configured to trigger the audio extraction, finally the audio graphic corresponding to the target audio and/or the third control associated with the target audio and configured to trigger the playing of the target audio can be displayed on the third interface, and/or, the fourth control associated with the target audio and configured to trigger the export of the data associated with the target audio to the target location can be displayed on the third interface, and/or, the fifth control associated with the target audio and configured to trigger the audio editing of the target audio can be displayed on the third interface. In this technical solution, audio uploading, audio processing, and audio presentation in various ways are performed through the controls on the interfaces, thus audio processing functions of the electronic device are enriched, audio processing intelligence of the electronic device is improved, personalized needs of users are met, and the user experience is improved.

Optionally, in an embodiment of the present disclosure, the audio editing of the target audio in S205 above may include the following steps.

A1, present, in response to an audio processing instruction, one or more audio processing function controls, where the one or more audio processing function controls are configured to trigger execution of corresponding audio processing functions.

A2, perform, in response to a touch-control operation on one audio processing function control in the one or more audio processing function controls, audio processing corresponding to the one audio processing function control, on the target audio, to obtain the processed target audio.

Optionally, in these steps, when the electronic device presents the obtained target audio on the third interface 33, and after the user plays the target audio through the third control 331 and listens to the target audio, and determines that the target audio does not meet requirements, the user can further give the audio processing instruction to proceed the editing of the target audio to obtain the processed target audio.

Illustratively, when receiving the user's audio processing instruction, the electronic device may respond to such instruction and present the one or more audio processing function controls, so as to detect audio processing instructions given through touch-controlling different audio processing function controls by the user, and then to perform different audio processing functions in response to the detected operations.

Optionally, in a possible design of the embodiment, after the user's touch-control operation on the fifth control 334 on the third interface (for example, the export to audio track in FIG. 3) is detected by the electronic device, a jump from the third interface 33 to the fourth interface is performed, so that multiple controls related to audio editing are displayed on the fourth interface.

As an example, the electronic device presents, in response to a touch-control operation on a sixth control on the fourth interface, one or more audio processing function controls or a seventh control associated with the one or more audio processing function controls. The seventh control is configured to trigger the presentation of the one or more audio processing function controls on a fifth interface.

Optionally, presenting the one or more audio processing function controls includes presenting the one or more audio processing function controls in a window form, or presenting multiple audio processing function controls through the fifth interface.

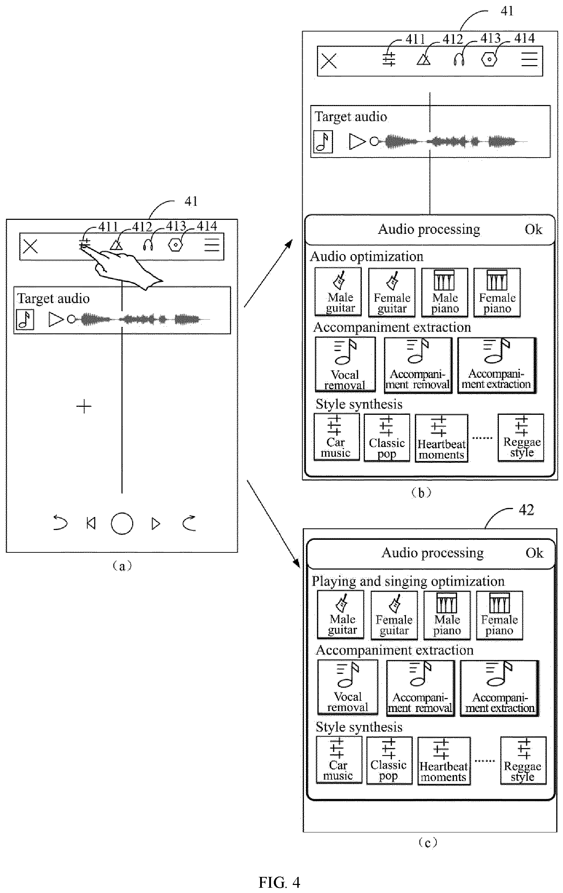

In a possible design, FIG. 4 is a schematic diagram of another interface for audio processing provided by an embodiment of the present disclosure. As shown in (a) of FIG. 4, a sixth control 411 is deployed on a fourth interface 41. The sixth control 411 may be designed as a control configured to trigger the presentation of one or more audio processing function controls. Therefore, when the user touch-controls the sixth control 411 and the touch-control operation on the sixth control 411 is detected by the electronic device, the one or more audio processing functional controls may be presented correspondingly.

Illustratively, when the electronic device responds to the detection of a touch-control operation on the sixth control 411, as shown in (b) of FIG. 4, a window may be presented on the fourth interface, and one or more audio processing function controls are presented on the window, or alternatively, as shown in (c) of FIG. 4, one or more audio processing function controls are presented on a fifth interface 42.

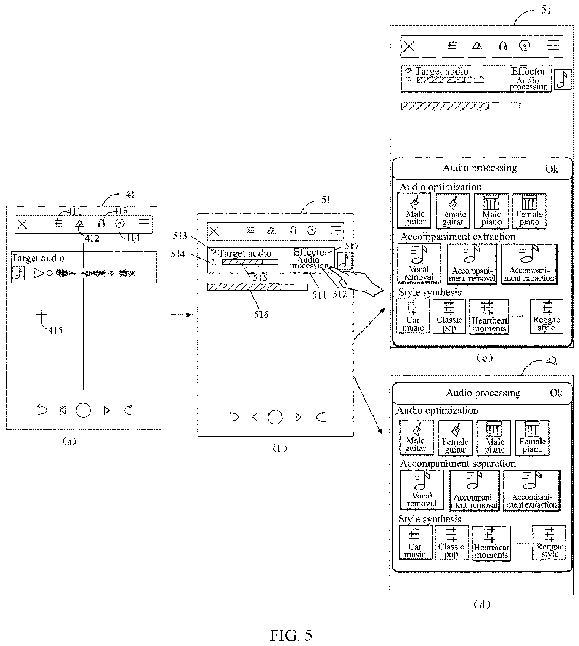

In another possible design, FIG. 5 is a schematic diagram of yet another interface for audio processing provided by an embodiment of the present disclosure. As shown in (a) of FIG. 5, the sixth control 411 is deployed on the fourth interface 41. The sixth control 411 may be designed for triggering the presentation of a seventh control associated with one or more audio processing function controls. Therefore, when the user touch-controls the sixth control 411 and the touch-control operation on the sixth control 411 is detected by the electronic device, as shown in (b) of FIG. 5, a seventh control 512 associated with the one or more audio processing function controls can be presented.

Illustratively, as shown in (b) of FIG. 5, when the electronic device responds to the detection of the touch-control operation on the sixth control 411, the interface of the electronic device jumps from the fourth interface 41 to an audio console interface 51, thereby the seventh control 512 associated with one or more audio processing function controls is presented in a first area 511 of the audio console interface 51.

Correspondingly, in response to the detection of the touch-control operation on the seventh control 512, as shown in (c) of FIG. 5, the electronic device may present a window with one or more audio processing function controls presented thereon, or alternatively, as shown in (d) of FIG. 5, the electronic device may present the one or more audio processing function controls on the fifth interface 42.

As another example, in response to a sliding operation on the fourth interface, the electronic device presents one or more audio processing function controls or the seventh control associated with the one or more audio processing function controls, and the seventh control is configured to trigger the presentation of the one or more audio processing function controls on the fifth interface.

In a possible design of the embodiment of the present disclosure, when the user performs a sliding operation on the fourth interface 41, correspondingly, the electronic device may present, in response to the sliding operation on the fourth interface 41, the one or more audio processing function controls directly through a window form or on the fifth interface. Reference may be made to FIG. 4 for a specific schematic diagram of the interface.

In another possible design of the embodiment of the present disclosure, when the user performs a sliding operation on the fourth interface (for example, a left sliding operation, and correspondingly, when the user performs a right sliding operation, it is possible to return from the audio console interface 51 to the fourth interface 41), correspondingly, the electronic device may present, in response to the sliding operation on the fourth interface, the seventh control associated with one or more audio processing function controls and then present, in response to the detection of the touch-control on the seventh control, the one or more audio processing function controls directly in the form of a window or on the fifth interface. Reference may be made to FIG. 5 for a specific schematic diagram of the interface.

Optionally, in an embodiment of the present disclosure, referring to the above-mentioned FIG. 4 and FIG. 5, in addition to the sixth control 411 (also called an interface switch button, configured to trigger switching between the audio track interface and the audio console interface), following may further be included on the fourth interface 41 and the audio console interface 51:
a metronome switch 412 configured to trigger setting of a metronome speed, time signature, an input device and preparatory beat, etc.;
an earphone monitoring switch 413 configured to trigger monitoring of a state of an earphone switch connected to the electronic device;
other setting 414; and
a track adding button 415 configured to trigger loading of a new track.

It can be understood that the embodiment of the present disclosure does not limit the types and functions of the controls included on each interface, which can be determined according to actual needs, and details are not described here.

Illustratively, following function support may further be included on the fourth interface 41:
supporting audio editing capabilities, for example, audio import and recording, creation of a new recording track by clicking a new track button;
supporting import of audio and video from a file, an album and an application, where with respect to the import, in addition to direct import, accompaniment extraction for audio and audio optimization before the import are also supported;
supporting sliding left on the fourth interface 41 to enter the audio console interface 51 on which there is a sound control 513 and a delete control 514, where the sound control 513 is configured to trigger a mute operation on the audio track, and the delete control 514 is configured to trigger a deletion operation on the audio track; and
also supporting control of withdrawal and recovery of operations by a play-control button at a bottom of the interface.

At the same time, on the audio console interface 51, a control of volume of a sub-track 515 and a general output channel 516 is also supported; on a right side of a volume slider, an effector control 517 is also included. By touch-controlling the effector control 517, one can choose to enter an effector interface, and can choose desired effect prefabrication and modify a degree of using an effect on the effector interface. Under an effector button, one can also choose audio processing to unlock more audio processing methods, which are not be described here.

Furthermore, in the embodiment of the present disclosure, after various audio generation processes are complemented and if a duration of an audio track needs to be edited, a return to the fourth interface (the audio track interface) and clicking to select an audio track waveform are performed, with the following operations supported: audio splitting, audio cutting, audio copy and segment deletion.

Optionally, upon a long press on a blank track, a paste button can be called out, with which cut or copied audio can be pasted. In addition, it is also supported that an audio duration is changed by dragging a beginning and an end of the audio.

Optionally, in an embodiment of the present disclosure, as shown in the above-mentioned FIG. 4 and/or FIG. 5 , the above-mentioned audio processing function controls include:
an audio optimization control configured to trigger editing of audio to optimize the audio;
an accompaniment extraction control configured to trigger extraction of a vocal and/or an accompaniment from audio;
a style synthesis control configured to trigger extraction of vocal from audio and mixing and editing of the extracted vocal with a preset accompaniment; and
an audio mashup control configured to trigger extraction of vocal from first audio, extraction of an accompaniment from second audio, and mixing and editing of the extracted vocal with the extracted accompaniment.

Optionally, in the embodiment, audio optimization may also be referred to as playing and singing optimization, which is a solution for optimizing vocal and/or musical instruments for the audio. For example, referring to FIG. 4 and/or FIG. 5 , audio optimization may include, but is not limited to, options including male guitar, female guitar, male piano, female piano, and the like.

Accompaniment extraction can include options of vocal removal, accompaniment removal, or accompaniment extraction (i.e., get vocal and an accompaniment after the extraction).

Style synthesis can also be called one-key remix, that is, the extracted vocal can be mixed and edited with a preset accompaniment. Optionally, the preset accompaniment may include but not limited to different genres including, but not limited to, car music, classic pop, heartbeat moments, relaxing moments, childhood fun, hip-hop backstreet, future bass, reggae style, drumbeat, etc., and, the embodiment of the present disclosure also does not limit names of various genres which can be named based on the needs of users, and details are not described here.

Audio mashup (mashup) is a solution for mixing and editing at least two pieces of audio, which can be mixing and editing of the vocal and the accompaniment, or mixing and editing of at least two pieces of vocal, or mixing and editing of at least two pieces of accompaniment. The embodiment of the present disclosure does not limit the source audio used.

In the embodiment, the electronic device may perform, in response to a touch-control operation on a first audio processing function control, an audio processing function corresponding to the first audio processing function control. The first audio processing function control may be at least one set of controls from various types of controls such as the audio optimization control, the accompaniment extraction control, the style synthesis control, and the audio mashup control.

In the embodiment of the present disclosure, a solution to jump from an accompaniment extraction function interface to an audio processing function interface is provided for the user, saving the path, allowing to proceed the editing and creation, meeting the user's diverse and personalized creation needs, and improving the user experience.

On the basis of the above-mentioned embodiments, when the electronic device presents the obtained target audio on the third interface 33, and after the user plays the target audio through the third control 331 and listens to the target audio, and determines that the target audio meets the requirements, the user then can give an audio export instruction through the fourth control 333 on the third interface 33, to export the target audio to the target position, for example, to the album or the file system.

As an example, in response to an operation on the fourth control 333 on the third interface 33, the data associated with the target audio can be directly exported to the target position, where the data associated with the target audio may include the to-be-processed audio, the target audio (the accompaniment and/or the vocal) obtained through execution of the audio extraction, etc., and may also be an audio segment used in an audio processing process, and details are not described here.

As another example, the embodiment of the present disclosure also provides a function of adding a cover to the target audio. Therefore, in response to the touch-control operation on the fourth control 333 on the third interface 33, a jump of the interface from the third interface 33 to a sixth interface can be performed, and the target audio is displayed on the sixth interface.

Correspondingly, in response to an interface editing instruction given on the sixth interface by the user, a cover can be added to the generated target audio or an original cover of the generated target audio can be changed. Similarly, in response to a detected save instruction, a generated target cover and the data associated with the target audio can be saved to a target location; in response to a detected sharing instruction, the generated target cover and the data associated with the target audio can be shared to a target application; in response to a detected import-to-audio-track instruction, the data associated with the target audio can also be imported to the audio track interface for the user to proceed the editing.

It can be understood that the embodiment of the present disclosure does not limit specific operations on the sixth interface, and corresponding operations can be performed based on user instructions to implement different functions.

In a possible design of the present disclosure, in response to an operation on the fifth control 334 on the third interface 33, a jump to the audio processing interface is performed and one or more audio processing function controls are presented, and in response to a touch-control operation on one audio processing function control in the one or more audio processing function controls, audio processing corresponding to the one audio processing function control is performed on the target audio to obtain the processed target audio, and then upon a detection of an export instruction, a jump to the sixth interface is performed, and the processed target audio is displayed on the sixth interface.

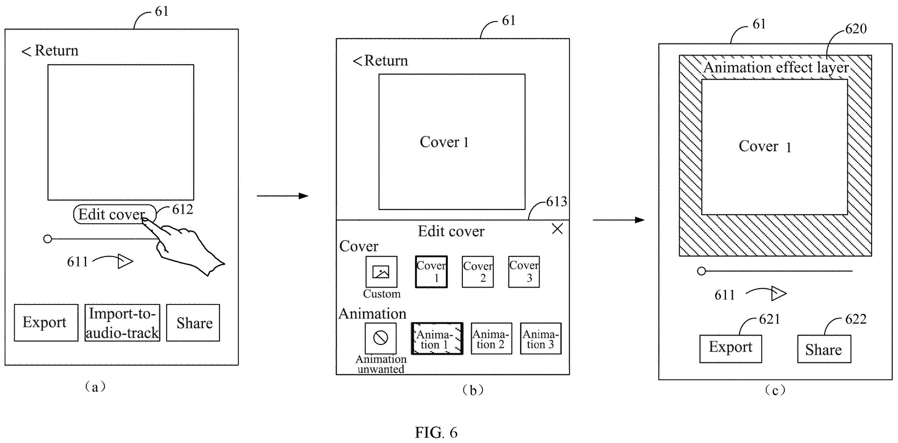

Illustratively, FIG. 6 is a schematic diagram of yet another interface of audio processing provided by an embodiment of the present disclosure. As shown in (a) of FIG. 6, a sixth interface 61 includes an eighth control 611 configured to trigger playing of the processed target audio.

Optionally, in (a) of FIG. 6, the sixth interface 61 further includes a ninth control 612, that is, a control for an editing interface, and the ninth control 612 is configured to trigger editing of the cover of the processed target audio.

Optionally, in (a) of FIG. 6, the sixth interface 61 further includes an export control, an import-to-audio-track control, and a share control. The export control is configured to export the data associated with the processed target audio to a target location, the import-to-audio-track control is configured to import the data associated with the processed target audio to the audio track interface for processing, and the share control is configured to share the data associated with the processed target audio to a target application, and so on. It can be understood that the embodiment does not limit the controls included on the sixth interface and the function of each control, and details are not described here.

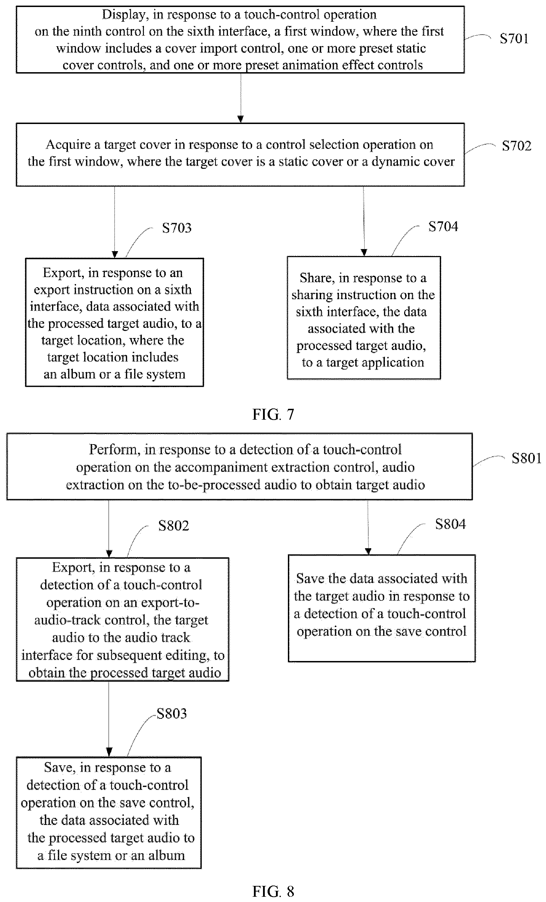

Illustratively, FIG. 7 is a schematic flowchart of yet another audio processing method provided by an embodiment of the present disclosure. As shown in FIG. 7, in an embodiment of the present disclosure, the audio processing method may further include the following steps.

S701, display, in response to a touch-control operation on the ninth control on the sixth interface, a first window, where the first window includes a cover import control, one or more preset static cover controls, and one or more preset animation effect controls.

In the embodiment of the present disclosure, when the electronic device presents a ninth control 612 configured to trigger cover editing, the user may give a cover editing instruction through the ninth control 612. For example, when the user's touch-control operation on the ninth control 612 is detected by the electronic device, in response to the touch-control operation, the electronic device may present an interface as shown in (b) of FIG. 6.

Referring to (b) of FIG. 6, a window may appear at a lower part of the sixth interface 61. In the embodiment, this window is called a first window 613, and there are a cover part and an animation part in the first window 613.

Optionally, the cover part includes a custom cover import control and one or more preset static cover controls. The cover import control is configured to trigger an import of a local picture, and the one or more preset static cover controls are configured to trigger selection of a preset static cover. It can be understood that the static cover is a plurality of pictures preset in a target application of the electronic device, for example, cover 1, cover 2 and cover 3.

Optionally, the animation part includes an animation-unwanted control and one or more preset animation effect controls. The animation-unwanted control is configured to trigger selection of no animation, that is, a cover generated by the electronic device has no animation effect. The one or more preset animation effect controls are configured to trigger selection of preset animation effects. It can be understood that the animation effects are a variety of dynamic changes preset in a target application of the electronic device. For example, the animation effects may include animation 1, animation 2 and animation 3.

S702, acquire a target cover in response to a control selection operation on the first window, where the target cover is a static cover or a dynamic cover.

In the embodiment, the user can select various controls presented on the sixth interface according to actual needs. For example, when the user touch-controls the custom cover import control, the electronic device can use a locally imported photo as a static cover of the audio, and when the user selects the animation-unwanted control from the animation part, the generated target cover is a static cover.

As another example, when the user selects a cover from the cover part and an animation from the animation part, respectively, a dynamic cover can be generated. Specifically, in the embodiment of the present disclosure, if the target cover is a dynamic cover, S702 may be implemented through the following steps.

B1, acquire, in response to the control selection operation on the first window, a static cover and an animation effect.

B2, generate, according to an audio characteristic of the processed target audio and the static cover and the animation effect, a dynamic cover that changes with the audio characteristic of the processed target audio, where the audio characteristic includes audio tempo and/or volume.

Optionally, in the embodiment, the electronic device may detect the user's control selection operation. For example, as shown in (b) of FIG. 6, when the user selects cover 1 and animation 1, a selection operation on a control corresponding to cover 1 and a selection operation on a control corresponding to animation 1 in the first window 613 can be detected by the electronic device and, in response to the selection operations on the controls, a dynamic cover 620 as shown in (c) of FIG. 6 can be generated, and the dynamic cover 620 can include cover 1 and an animation effect layer corresponding to animation 1.

It can be understood that, in the embodiment of the present disclosure, when the user clicks the eighth control 611 below the dynamic cover 620 in (c) of FIG. 6, the electronic device may play the processed target audio in response to the clicking operation on the eighth control 611, and at this time, the dynamic cover can change in real time along with the audio beat and/or volume and other audio characteristics of the processed target audio.

Optionally, when the final audio processing and editing operations are completed, the electronic device can also export the generated target cover and the data associated with the target audio in response to the user's operation. Optionally, an export to an album or a file is supported. And the cover can be replaced at a time of the export to the album, and one can choose to finish or choose a share to a target application after the export is completed.

In addition, the user can also choose a share to a file. At this time, a compressed package containing the audio is automatically generated for facilitating the user's sending to other places for further editing.

Optionally, in an embodiment of the present disclosure, after the above S702, the audio processing method may further include the following step.

S703, export, in response to an export instruction on a sixth interface, data associated with the processed target audio, to a target location, where the target location includes an album or a file system.

In the embodiment, the export instruction may be a voice, a touch-control operation on an export control, and the like.

For example, when a voice recognition function on the sixth interface is enabled, the user can give the export instruction by voice.

For another example, as shown in (a) and (c) of FIG. 6, the sixth interface 61 further includes an export control 621. Correspondingly, when the user touches or presses the export control 621 on the sixth interface, the electronic device can export, in response to the touch-control operation on the export control 621, the data associated with the processed target audio to a target location, for example, to an album or a file system.

Optionally, in an embodiment of the present disclosure, after the above S702, the audio processing method may further include the following step.

S704, share, in response to a touch-control operation on a share control on the sixth interface, the data associated with the processed target audio, to a target application.

Illustratively, in the embodiment, the sharing instruction may be a voice, a touch-control operation on a share control, and the like. For example, when the voice recognition function on the sixth interface is enabled, the user can give a sharing instruction by voice.

For another example, as shown in (a) and (c) of FIG. 6, the sixth interface 61 further includes a share control 622. Correspondingly, when the user touches or presses the share control 622 on the sixth interface, the electronic device can share, in response to the touch-control operation on the share control 622, the data associated with the processed target audio to a target application, for example, various applications such as a short video application or a mini program application or a chat application.

It can be understood that, in the embodiment of the present disclosure, the above-mentioned data associated with the processed target audio includes at least one of the following:
the processed target audio, the vocal, the accompaniment, a static cover of the processed target audio, a dynamic cover of the processed target audio.

It can be understood that in the embodiment, the data associated with the processed target audio may be materials such as audio clips and audio data (for example, vocal, an accompaniment, etc.) at various stages of audio processing, or materials such as the static cover and the dynamic cover of the target audio, or compression packages, material packages, etc. that are compressed from multiple pieces of audio data. The embodiment does not limit the specific forms of the data associated with the processed target audio.

Illustratively, the electronic device may share and/or export various data associated with the processed target audio. For example, based on the user's instruction(s), the electronic device may export and/or share the generated data associated with the processed target audio, and may also export and/or share the audio-processed target audio (vocal or an accompaniment, etc.), and may also export and/or share a generated target cover (static cover or dynamic cover) together with the target audio. There is no limit in this regards in the embodiment.

On the basis of the foregoing embodiments, FIG. 8 is a schematic flowchart of yet another audio processing method provided by an embodiment of the present disclosure. As shown in FIG. 8, the audio processing method provided by the embodiment of the present disclosure may include the following steps.

S801, perform, in response to a detection of a touch-control operation on the accompaniment extraction control, audio extraction on the to-be-processed audio to obtain the target audio.

As an example, the electronic device may process the to-be-processed audio to obtain the target audio.

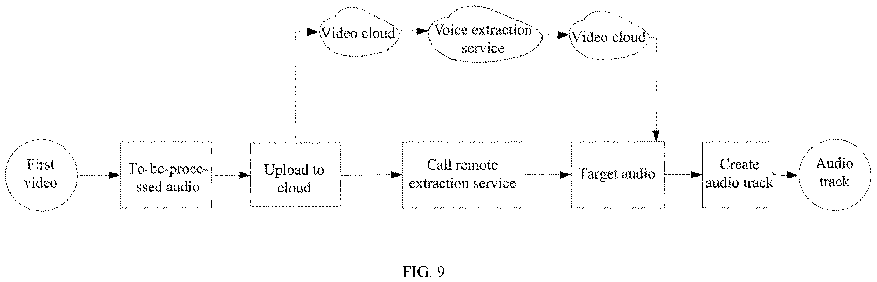

As another example, the electronic device may also upload the to-be-processed audio to a cloud, so as to invoke a remote extraction service to extract the target audio from the to-be-processed audio. Optionally, FIG. 9 is a schematic diagram of an implementation principle of accompaniment extraction provided by an embodiment of the present disclosure. As shown in FIG. 9, in the embodiment, based on the user's selection operation, the electronic device can first acquire a first video from the album, then extract the to-be-processed audio from the first video, and then upload the to-be-processed audio to a cloud, and perform the audio extraction on the to-be-processed audio by calling the remote extraction service, so as to obtain the extracted target audio. Furthermore, after an audio track is created, the electronic device can present the created audio track of the target audio on an interface.

Specifically, as shown in FIG. 9, the to-be-processed audio uploaded to the cloud is first transmitted to a video cloud, and then goes through a voice extraction service in the cloud. The target audio in the to-be-processed audio is extracted and saved to the video cloud, and finally the electronic device interacts with the cloud, and downloads the extracted target audio from the video cloud in the cloud.

It can be understood that, after obtaining the target audio, the electronic device may execute different processes in response to the user's touch-control operations on different controls.

As an example, after S801, the audio processing method may include the following steps.

S802, export, in response to a detection of a touch-control operation on an export-to-audio-track control, the target audio to the audio track interface for subsequent editing, to obtain the processed target audio.

S803, save, in response to a detection of a touch-control operation on the save control, the data associated with the processed target audio to a file system or an album.

Illustratively, for a generated audio file, in order to facilitate subsequent editing on other devices, the processed target audio and its related data can be compressed to obtain a file in the form of a compressed package for processing and storage together.

Optionally, in the embodiment, when the data associated with the processed target audio is saved to the album, it may be supported that a cover of a file such as the target audio is replaced or a cover is added thereto by default, so as to improve the aesthetic feeling of the user when enjoying the target audio.

As another example, after S801, the audio processing method may include the following step.

S804, save the data associated with the target audio in response to a detection of a touch-control operation on the save control.

Illustratively, the data associated with the target audio may be saved to a file system or an album.

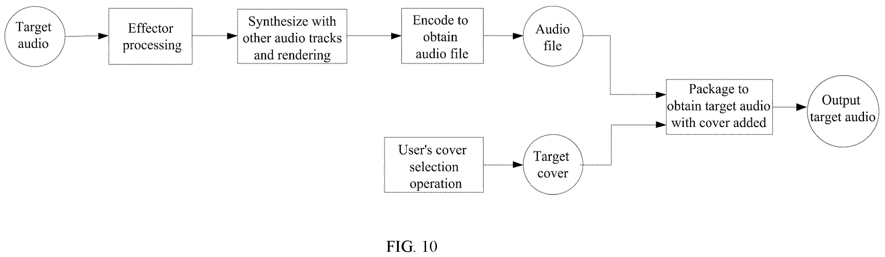

Optionally, in the above S803 and S804, for a manner of saving the data associated with the target audio, reference may be made to the following FIG. 10. Optionally, FIG. 10 is a schematic diagram of an implementation principle of saving an audio file provided by an embodiment of the present disclosure. As shown in FIG. 10, in the embodiment, when the user's save instruction is detected by the electronic device, on the one hand, the electronic device first performs effector processing on an audio track of the target video in a form of audio blocks, and then synthesizes other audio tracks of an audio processing process, and renders the synthesization result, and then performs audio encoding on the rendering result to output an audio file; on the other hand, in response to the user's cover selection operation, the electronic device generates a target cover (a static cover or a dynamic cover), and finally, packages the audio file and the target cover together to obtain the target audio with the cover added.

For the specific implementation of each step in the embodiment, reference may be made to the descriptions in the foregoing embodiments, and details are not repeated here.

From the contents recorded in the above-mentioned embodiments, it can be seen that the audio processing method provided by the embodiments of the present disclosure enables the result of the accompaniment extraction to be open and output to users, meeting the diverse needs of the users, provides a jump from the accompaniment extraction function to the audio track processing interface, not only saving the interface jump path, but also providing the possibility to proceed editing and creation on the results of the accompaniment extraction, provides a new way of saving, that is, supporting saving to a file and saving to an album, and supports changing the cover of the file, thus improving the intelligence of the application program to which the audio processing method is applicable, and improving the user experience.

The following are apparatus embodiments of the present application, which can be used to implement the method embodiments of the present application. For details not disclosed in the apparatus embodiments of the present application, please refer to the method embodiments of the present application.

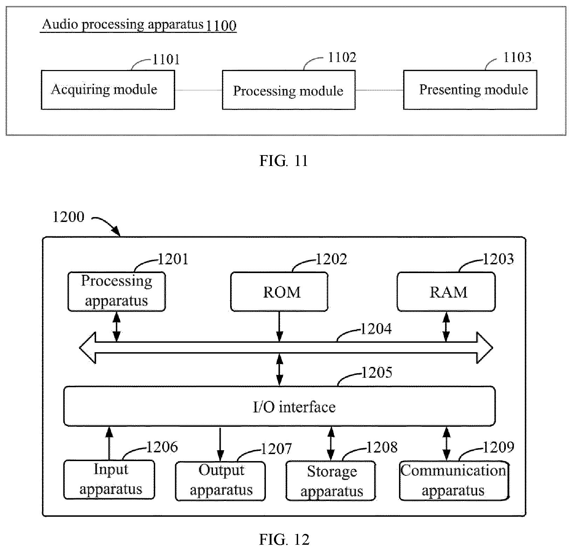

FIG. 11 is a schematic structural diagram of an audio processing apparatus provided by an embodiment of the present disclosure. The audio processing apparatus 1100 may be integrated in an electronic device, or may be implemented by an electronic device. Referring to FIG. 11, the audio processing apparatus 1100 may include:
an acquiring module 1101, configured to acquire, in response to an audio acquisition instruction, to-be-processed audio;
a processing module 1102, configured to perform, in response to an audio extraction instruction for the to-be-processed audio, audio extraction on the to-be-processed audio, to obtain target audio, where the target audio is a vocal and/or an accompaniment extracted from the to-be-processed audio; and
a presenting module 1103, configured to present the target audio.

In an optional embodiment of the present disclosure, the acquiring module 1101 is specifically configured to acquire, in response to a touch-control operation on a first control on a first interface, the to-be-processed audio, where the first control is configured to trigger loading of audio.

In an optional embodiment of the present disclosure, the processing module 1102 is specifically configured to perform, in response to a touch-control operation on a second control on a second interface, the audio extraction on the to-be-processed audio, to obtain the target audio, where the second control is configured to trigger the audio extraction.

In an optional embodiment of the present disclosure, the presenting module 1103 is specifically configured to display, on a third interface, an audio graphic corresponding to the target audio and/or a third control associated with the target audio, where the third control is configured to trigger playing of the target audio.

In an optional embodiment of the present disclosure, the presenting module 1103 is specifically configured to display, on a third interface, a fourth control associated with the target audio, where the fourth control is configured to trigger an export of data associated with the target audio to a target location, and the target location includes an album or a file system.

In an optional embodiment of the present disclosure, the presenting module 1103 is specifically configured to display, on a third interface, a fifth control associated with the target audio, where the fifth control is configured to trigger audio editing of the target audio.

In an optional embodiment of the present disclosure, the presenting module 1103 is further configured to present, in response to an audio processing instruction, one or more audio processing function controls, where the one or more audio processing function controls are configured to trigger execution of corresponding audio processing functions; and
the processing module 1102 is further configured to perform, in response to a touch-control operation on one audio processing function control in the one or more audio processing function controls, audio processing corresponding to the one audio processing function control, on the target audio, to obtain the processed target audio.

In an optional embodiment of the present disclosure, the presenting module 1103 is specifically configured to present, in response to a touch-control operation on a sixth control on a fourth interface, the one or more audio processing function controls or a seventh control associated with the one or more audio processing function controls, where the seventh control is configured to trigger presentation of the one or more audio processing function controls on a fifth interface.

In an optional embodiment of the present disclosure, the presenting module 1103 is specifically configured to present, in response to a sliding operation on a fourth interface, the one or more audio processing function controls or a seventh control associated with the one or more audio processing function controls, where the seventh control is configured to trigger presentation of the one or more audio processing function controls on a fifth interface.

In an optional embodiment of the present disclosure, the audio processing function controls include:
an audio optimization control configured to trigger editing of audio to optimize the audio;
an accompaniment extraction control configured to trigger extraction of a vocal and/or an accompaniment from audio;
a style synthesis control configured to trigger extraction of vocal from audio and mixing and editing of the extracted vocal with a preset accompaniment; and
an audio mashup control configured to trigger extraction of vocal from first audio, extraction of an accompaniment from second audio, and mixing and editing of the extracted vocal with the extracted accompaniment.

In an optional embodiment of the present disclosure, the presenting module 1103 is further configured to display the processed target audio on a sixth interface, where the sixth interface includes an eighth control, and the eighth control is configured to trigger playing of the processed target audio.

In an optional embodiment of the present disclosure, the sixth interface further includes a ninth control, and the presenting module 1103 is further configured to display, in response to a touch-control operation on the ninth control on the sixth interface, a first window, where the first window includes a cover import control, one or more preset static cover controls, and one or more preset animation effect controls; and
the processing module 1102 is further configured to acquire a target cover in response to a control selection operation on the first window;
where the target cover is a static cover or a dynamic cover.

In an optional embodiment of the present disclosure, if the target cover is the dynamic cover, the processing module 1102 is specifically configured to:
acquire, in response to the control selection operation on the first window, a static cover and an animation effect; and
generate, according to an audio characteristic of the processed target audio and the static cover and the animation effect, a dynamic cover that changes with the audio characteristic of the processed target audio;
the audio characteristic includes audio tempo and/or volume.

In an optional embodiment of the present disclosure, the processing module 1102 is further configured to export, in response to an export instruction on a sixth interface, data associated with the processed target audio, to a target location, where the target location includes an album or a file system.

In an optional embodiment of the present disclosure, the processing module 1102 is further configured to share, in response to a sharing instruction on a sixth interface, data associated with the processed target audio, to a target application.

In an optional embodiment of the present disclosure, the data associated with the processed target audio includes at least one of the following:
the processed target audio, the vocal, the accompaniment, a static cover of the processed target audio, and a dynamic cover of the processed target audio.

The audio processing apparatus provided in the embodiment can be used to implement the technical solutions of the above method embodiments, and their implementation principles and technical effects are similar, and are not described in detail here in the embodiment.

FIG. 12 is a structural block diagram of an electronic device provided by an embodiment of the present disclosure. As shown in FIG. 12, the electronic device 1200 may be a terminal device or a server. The terminal device may include but not limited to mobile terminals such as a mobile phone, a notebook computer, a digital broadcast receiver, a personal digital assistant (Personal Digital Assistant, PDA for short), a portable android device (Portable Android Device, PAD for short), a portable media player (Portable Media Player, PMP for short), and a vehicle-mounted terminal (such as a vehicle-mounted navigation terminal), etc. and fixed terminals such as a digital TV and a desktop computer, etc. The electronic device shown in FIG. 12 is only an example, and should not limit the functions and application scope of the embodiments of the present disclosure.

As shown in FIG. 12, an electronic device 1200 may include a processing apparatus (e.g., a central processor, a graphics processor, etc.) 1201 which may perform various appropriate actions and processing according to a program stored in a read only memory (Read Only Memory, ROM for short) 1202 or a program loaded from a storage apparatus 1208 into a random access memory (Random Access Memory, RAM for short) 1203. Various programs and data necessary for the operation of the electronic device 1200 are further stored in the RAM 1203. The processing apparatus 1201, ROM 1202, and RAM 1203 are connected to each other through a bus 1204. And an input/output (Input/Output, I/O for short) interface 1205 is also connected to the bus 1204.

Generally, the following apparatuses may be connected to the I/O interface 1205: an input apparatus 1206 including, for example, a touch screen, a touchpad, a keyboard, a mouse, a camera, a microphone, an accelerometer, a gyroscope, etc.; an output apparatus 1207 including, for example, a liquid crystal display (Liquid Crystal Display, LCD for short), a speaker, a vibrator, etc.; a storage apparatus 1208 including, for example, a magnetic tape, a hard disk, etc.; and a communication apparatus 1209. The communication means 1209 may allow the electronic device 1200 to perform wireless or wired communication with other devices to exchange data. Although FIG. 12 shows the electronic device 1200 having various apparatuses, it should be understood that not all of the illustrated apparatuses are required to be implemented or provided. More or fewer apparatuses may alternatively be implemented or provided.

In particular, according to an embodiment of the present disclosure, the processes described above with reference to the flowcharts may be implemented as a computer software program. For example, an embodiment of the present disclosure includes a computer program product, which includes a computer program carried on a computer-readable medium, where the computer program includes program codes for executing the methods shown in the flowcharts. In such an embodiment, the computer program may be downloaded from a network and installed via the communication apparatus 1209, or installed from the storage apparatus 1208, or installed from the ROM 1202. When the computer program is executed by the processing apparatus 1201, the above-mentioned functions defined in the methods of the embodiments of the present disclosure are performed.

It should be noted that the above-mentioned computer-readable medium in the present disclosure may be a computer-readable signal medium or a computer-readable storage medium or any combination thereof. The computer-readable storage medium may be, for example, but not limited to, an electrical, a magnetic, an optical, an electromagnetic, an infrared, or a semiconductor system, apparatus, or device, or any combination thereof. More specific examples of computer-readable storage media may include, but are not limited to, an electrical connection with one or more wires, a portable computer disk, a hard disk, a random access memory (RAM), a read-only memory (ROM), an erasable programmable read-only memory (Erasable Programmable Read-Only Memory, EPROM for short, or a flash memory), an optical fiber, a portable compact disc read-only memory (Compact Disc Read-Only Memory, CD-ROM for short), an optical storage device, a magnetic storage device, or any suitable combination thereof. In the present disclosure, the computer-readable storage medium may be any tangible medium that contains or stores a program that can be used by or in conjunction with an instruction execution system, apparatus, or device. In the present disclosure, the computer-readable signal medium may include a data signal propagated in a baseband or as part of a carrier wave carrying computer-readable program codes therein. Such a propagated data signal may take a variety of forms, including but not limited to an electromagnetic signal, an optical signal, or any suitable combination thereof. The computer-readable signal medium may also be any computer-readable medium other than the computer-readable storage medium, and the computer-readable signal medium can transmit, propagate, or transport the program used by or in conjunction with the instruction execution system, apparatus, or device. The program codes contained on the computer-readable medium may be transmitted through any appropriate medium, including but not limited to: an electric wire, an optical fiber cable, an RF (radio frequency), etc., or any suitable combination thereof.

The above-mentioned computer-readable medium may be included in the above-mentioned electronic device, or may exist independently without being incorporated into the electronic device.

The above-mentioned computer-readable medium carries one or more programs, and when the above-mentioned one or more programs are executed by the electronic device, the electronic device is caused to implement the methods shown in the above-mentioned embodiments.

The computer program codes for carrying out the operations of the present disclosure may be written in one or more programming languages, or a combination thereof, where the above programming languages include an object-oriented programming language, such as Java, Smalltalk, and C++, as well as a conventional procedural programming language, such as "C" language or similar programming languages. The program codes may be executed entirely on a user computer, executed partly on a user computer, executed as a stand-alone software package, executed partly on a user computer and partly on a remote computer, or executed entirely on a remote computer or a server. In a case involving the remote computer, the remote computer may be connected to the user computer through any kind of network, including a local area network (Local Area Network, LAN for short) or a wide area network (Wide Area Network, WAN for short), or may be connected to an external computer (e. g., connected via the Internet using an Internet service provider).

The flowchart and block diagrams in the figures illustrate the architecture, functionality, and operation of possible implementations of the systems, methods and computer program products according to various embodiments of the present disclosure. In this regard, each block in a flowchart or block diagram may represent a module, a program segment, or a portion of codes that includes one or more executable instructions for implementing a specified logical function. It should also be noted that, in some alternative implementations, functions indicated in the blocks may occur in an order different from that indicated in the figures. For example, two blocks shown in succession may, in fact, be executed substantially concurrently, or the blocks may sometimes be executed in the reverse order, depending upon the functionality involved. It should also be noted that each block of the block diagrams and/or flowcharts, or a combination of blocks in the block diagrams and/or flowcharts may be implemented in a special purpose hardware-based system that perform a specified function or operation, or may be implemented in a combination of special purpose hardware and a computer instruction.

The apparatuses or modules involved in the embodiments described in the present disclosure may be implemented by means of software or by means of hardware. Names of the apparatuses do not constitute a limitation on the apparatuses or modules per se under certain circumstances.

The functions described herein above may be performed at least in part by one or more hardware logic components. For example, without limitation, exemplary types of hardware logic components that may be used include: a field programmable gate array (Field Programmable Gate Array, FPGA for short), an application specific integrated circuit (Application Specific Integrated Circuit, ASIC for short), an application specific standard product (Application Specific Standard Parts, ASSP for short), a system on chip (System on Chip, SOC for short), a complex programmable logic device (Complex Programmable Logic Device, CPLD for short), etc.

In the context of the present disclosure, a machine-readable medium may be a tangible medium that may contain or store a program for use by or in conjunction with an instruction execution system, apparatus, or device. The machine-readable medium may be a machine-readable signal medium or a machine-readable storage medium. The machine-readable medium may include, but is not limited to, an electronic, a magnetic, an optical, an electromagnetic, an infrared, or a semiconductor systems, apparatus, or devices, or any suitable combination thereof. More specific examples of the machine-readable storage medium would include an electrical connection based on one or more wires, a portable computer disk, a hard disk, a random access memory (RAM), a read only memory (ROM), an erasable programmable read only memory (EPROM or a flash memory), fiber optics, a portable compact disk read only memory (CD-ROM), an optical storage device, a magnetic storage device, or any suitable combination of the foregoing.

In a first aspect, according to one or more embodiments of the present disclosure, an audio processing method is provided, including:
acquiring, in response to an audio acquisition instruction, to-be-processed audio;
performing, in response to an audio extraction instruction for the to-be-processed audio, audio extraction on the to-be-processed audio, to obtain target audio, where the target audio is a vocal and/or an accompaniment extracted from the to-be-processed audio;
presenting the target audio.

According to one or more embodiments of the present disclosure, the acquiring, in response to the audio acquisition instruction, the to-be-processed audio includes:
acquiring, in response to a touch-control operation on a first control on a first interface, the to-be-processed audio, where the first control is configured to trigger loading of audio.

According to one or more embodiments of the present disclosure, the performing, in response to the audio extraction instruction for the to-be-processed audio, the audio extraction on the to-be-processed audio, to obtain the target audio includes:
performing, in response to a touch-control operation on a second control on a second interface, the audio extraction on the to-be-processed audio, to obtain the target audio, where the second control is configured to trigger the audio extraction.

According to one or more embodiments of the present disclosure, the presenting the target audio includes:
displaying, on a third interface, an audio graphic corresponding to the target audio and/or a third control associated with the target audio, where the third control is configured to trigger playing of the target audio.

According to one or more embodiments of the present disclosure, the presenting the target audio includes:
displaying, on a third interface, a fourth control associated with the target audio, where the fourth control is configured to trigger an export of data associated with the target audio to a target location, and the target location includes an album or a file system.

According to one or more embodiments of the present disclosure, the presenting the target audio includes:
displaying, on a third interface, a fifth control associated with the target audio, where the fifth control is configured to trigger audio editing of the target audio.

According to one or more embodiments of the present disclosure, the audio editing of the target audio includes:
presenting, in response to an audio processing instruction, one or more audio processing function controls, where the one or more audio processing function controls are configured to trigger execution of corresponding audio processing functions;
performing, in response to a touch-control operation on one audio processing function control in the one or more audio processing function controls, audio processing corresponding to the one audio processing function control, on the target audio, to obtain the processed target audio.

According to one or more embodiments of the present disclosure, the presenting, in response to the audio processing instruction, the one or more audio processing function controls includes:
presenting, in response to a touch-control operation on a sixth control on a fourth interface, the one or more audio processing function controls or a seventh control associated with the one or more audio processing function controls, where the seventh control is configured to trigger presentation of the one or more audio processing function controls on a fifth interface.

According to one or more embodiments of the present disclosure, the presenting, in response to the audio processing instruction, the one or more audio processing function controls includes:
presenting, in response to a sliding operation on a fourth interface, the one or more audio processing function controls or a seventh control associated with the one or more audio processing function controls, where the seventh control is configured to trigger presentation of the one or more audio processing function controls on a fifth interface.

According to one or more embodiments of the present disclosure, the audio processing function controls include:
an audio optimization control configured to trigger editing of audio to optimize the audio;
an accompaniment extraction control configured to trigger extraction of a vocal and/or an accompaniment from audio;
a style synthesis control configured to trigger extraction of vocal from audio and mixing and editing of the extracted vocal with a preset accompaniment;
an audio mashup control configured to trigger extraction of vocal from first audio, extraction of an accompaniment from second audio, and mixing and editing of the extracted vocal with the extracted accompaniment.

According to one or more embodiments of the present disclosure, the method further includes: displaying the processed target audio on a sixth interface, where the sixth interface includes an eighth control, and the eighth control is configured to trigger playing of the processed target audio.

According to one or more embodiments of the present disclosure, the sixth interface further includes a ninth control, and the method further includes:
displaying, in response to a touch-control operation on the ninth control on the sixth interface, a first window, where the first window includes a cover import control, one or more preset static cover controls, and one or more preset animation effect controls;
acquiring, in response to a control selection operation on the first window, a target cover;
where the target cover is a static cover or a dynamic cover.

According to one or more embodiments of the present disclosure, if the target cover is the dynamic cover, the acquiring, in response to the control selection operation on the first window, the target cover includes:
acquiring, in response to the control selection operation on the first window, a static cover and an animation effect;
generating, according to an audio characteristic of the processed target audio and the static cover and the animation effect, a dynamic cover that changes with the audio characteristic of the processed target audio;
where the audio characteristic includes audio tempo and/or volume.

According to one or more embodiments of the present disclosure, the method further includes:
exporting, in response to an export instruction on a sixth interface, data associated with the processed target audio, to a target location, where the target location includes an album or a file system.

According to one or more embodiments of the present disclosure, the method further includes:
sharing, in response to a sharing instruction on a sixth interface, data associated with the processed target audio, to a target application.

According to one or more embodiments of the present disclosure, the data associated with the processed target audio includes at least one of the following:
the processed target audio, the vocal, the accompaniment, a static cover of the processed target audio, and a dynamic cover of the processed target audio.

In a second aspect, according to one or more embodiments of the present disclosure, an audio processing device is provided, including:
an acquiring module, configured to acquire, in response to an audio acquisition instruction, to-be-processed audio;
a processing module, configured to perform, in response to an audio extraction instruction for the to-be-processed audio, audio extraction on the to-be-processed audio, to obtain target audio, where the target audio is a vocal and/or an accompaniment extracted from the to-be-processed audio; and
a presenting module, configured to present the target audio.

According to one or more embodiments of the present disclosure, the acquiring module is specifically configured to acquire, in response to a touch-control operation on a first control on a first interface, the to-be-processed audio, where the first control is configured to trigger loading of audio.

According to one or more embodiments of the present disclosure, the processing module is specifically configured to perform, in response to a touch-control operation on a second control on a second interface, the audio extraction on the to-be-processed audio, to obtain the target audio, where the second control is configured to trigger the audio extraction.

According to one or more embodiments of the present disclosure, the presenting module is specifically configured to display, on a third interface, an audio graphic corresponding to the target audio and/or a third control associated with the target audio, where the third control is configured to trigger playing of the target audio.

According to one or more embodiments of the present disclosure, the presenting module is specifically configured to display, on a third interface, a fourth control associated with the target audio, where the fourth control is configured to trigger an export of data associated with the target audio to a target location, and the target location includes an album or a file system.

According to one or more embodiments of the present disclosure, the presenting module is specifically configured to display, on a third interface, a fifth control associated with the target audio, where the fifth control is configured to trigger audio editing of the target audio.

According to one or more embodiments of the present disclosure, the presenting module is further configured to present, in response to an audio processing instruction, one or more audio processing function controls, where the one or more audio processing function controls are configured to trigger execution of corresponding audio processing functions; and
the processing module is further configured to perform, in response to a touch-control operation on one audio processing function control in the one or more audio processing function controls, audio processing corresponding to the one audio processing function control, on the target audio, to obtain the processed target audio.

According to one or more embodiments of the present disclosure, the presenting module is specifically configured to present, in response to a touch-control operation on a sixth control on a fourth interface, the one or more audio processing function controls or a seventh control associated with the one or more audio processing function controls, where the seventh control is configured to trigger presentation of the one or more audio processing function controls on a fifth interface.

According to one or more embodiments of the present disclosure, the presenting module is specifically configured to present, in response to a sliding operation on a fourth interface, the one or more audio processing function controls or a seventh control associated with the one or more audio processing function controls, where the seventh control is configured to trigger presentation of the one or more audio processing function controls on a fifth interface.

According to one or more embodiments of the present disclosure, the audio processing function controls include:
an audio optimization control configured to trigger editing of audio to optimize the audio;
an accompaniment extraction control configured to trigger extraction of a vocal and/or an accompaniment from audio;
a style synthesis control configured to trigger extraction of vocal from audio and mixing and editing of the extracted vocal with a preset accompaniment; and
an audio mashup control configured to trigger extraction of vocal from first audio, extraction of an accompaniment from second audio, and mixing and editing of the extracted vocal with the extracted accompaniment.

According to one or more embodiments of the present disclosure, the presenting module is further configured to display the processed target audio on a sixth interface, where the sixth interface includes an eighth control, and the eighth control is configured to trigger playing of the processed target audio.

According to one or more embodiments of the present disclosure, the sixth interface further includes a ninth control, and the presenting module is further configured to display, in response to a touch-control operation on the ninth control on the sixth interface, a first window, where the first window includes a cover import control, one or more preset static cover controls, and one or more preset animation effect controls; and
the processing module is further configured to acquire a target cover in response to a control selection operation on the first window;
where the target cover is a static cover or a dynamic cover.

According to one or more embodiments of the present disclosure, if the target cover is the dynamic cover, the processing module is specifically configured to:
acquire, in response to the control selection operation on the first window, a static cover and an animation effect; and
generate, according to an audio characteristic of the processed target audio and the static cover and the animation effect, a dynamic cover that changes with the audio characteristic of the processed target audio;
where the audio characteristic includes audio tempo and/or volume.

According to one or more embodiments of the present disclosure, the processing module is further configured to export, in response to an export instruction on a sixth interface, data associated with the processed target audio, to a target location, where the target location includes an album or a file system.

According to one or more embodiments of the present disclosure, the processing module is further configured to share, in response to a sharing instruction on a sixth interface, data associated with the processed target audio, to a target application.

According to one or more embodiments of the present disclosure, the data associated with the processed target audio includes at least one of the following:
the processed target audio, the vocal, the accompaniment, a static cover of the processed target audio, and a dynamic cover of the processed target audio.

In a third aspect, according to one or more embodiments of the present disclosure, an electronic device is provided, including: at least one processor and a memory;
the memory stores a computer-executed instruction; and
the at least one processor executes the computer-executed instruction stored in the memory, to cause the at least one processor to execute the audio processing method described in the above first aspect and various possible designs of the first aspect.

In a fourth aspect, according to one or more embodiments of the present disclosure, a computer-readable storage medium is provided, where a computer-executed instruction is stored in the computer-readable storage medium, and when the computer-executed instruction is executed by a processor, the audio processing method described in the above first aspect and various possible designs of the first aspect is implemented.

In a fifth aspect, according to one or more embodiments of the present disclosure, a computer program product is provided, including a computer program, where when the computer program is executed by a processor, the audio processing method described in the above first aspect and various possible designs of the first aspect is implemented.

In a sixth aspect, according to one or more embodiments of the present disclosure, a computer program is provided, where when the computer program is executed by a processor, the audio processing method described in the above first aspect and various possible designs of the first aspect is implemented.

The above descriptions are only preferred embodiments of the present disclosure and illustrations of an applied technical principle. Those skilled in the art should understand that the disclosure scope involved in this disclosure is not limited to a technical solution formed by a specific combination of the above-mentioned technical features, but should also cover other technical solutions formed by any combination of the above technical features or their equivalents without departing from the above disclosure concept, for example, technical solutions formed by a mutual replacement between the above features and the technical features with similar functions (but not limited to) disclosed in the present disclosure.

**In** addition, while operations are depicted in a particular order, this should not be understood as requiring that the operations are performed in the particular order shown or performed in sequential order. Under certain circumstances, multitasking and parallel processing may be advantageous. Likewise, while the above discussion contains several specific implementation details, these should not be construed as limitations on the scope of the disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in language specific to structural features and/or methodological acts, it is to be understood that the subject matter defined in the appended claims is not necessarily limited to the specific features or acts described above. Rather, the specific features and acts described above are merely example forms of implementing the claims.

## Claims

1. An audio processing method, comprising:
acquiring, in response to an audio acquisition instruction, to-be-processed audio;
performing, in response to an audio extraction instruction for the to-be-processed audio, audio extraction on the to-be-processed audio, to obtain target audio, wherein the target audio is a vocal and/or an accompaniment extracted from the to-be-processed audio;
presenting the target audio.

2. The method according to claim 1, wherein the acquiring, in response to the audio acquisition instruction, the to-be-processed audio comprises:
acquiring, in response to a touch-control operation on a first control on a first interface, the to-be-processed audio, wherein the first control is configured to trigger loading of audio.

3. The method according to claim 1 or 2, wherein the performing, in response to the audio extraction instruction for the to-be-processed audio, the audio extraction on the to-be-processed audio, to obtain the target audio comprises:
performing, in response to a touch-control operation on a second control on a second interface, the audio extraction on the to-be-processed audio, to obtain the target audio, wherein the second control is configured to trigger the audio extraction.

4. The method according to any one of claims 1 to 3, wherein the presenting the target audio comprises:
displaying, on a third interface, an audio graphic corresponding to the target audio and/or a third control associated with the target audio, wherein the third control is configured to trigger playing of the target audio.

5. The method according to any one of claims 1 to 3, wherein the presenting the target audio comprises:
displaying, on a third interface, a fourth control associated with the target audio, wherein the fourth control is configured to trigger an export of data associated with the target audio to a target location, and the target location comprises an album or a file system.

6. The method according to any one of claims 1 to 3, wherein the presenting the target audio comprises:
displaying, on a third interface, a fifth control associated with the target audio, wherein the fifth control is configured to trigger audio editing of the target audio.

7. The method according to claim 6, wherein the audio editing of the target audio comprises:
presenting, in response to an audio processing instruction, one or more audio processing function controls, wherein the one or more audio processing function controls are configured to trigger execution of corresponding audio processing functions;
performing, in response to a touch-control operation on one audio processing function control in the one or more audio processing function controls, audio processing corresponding to the one audio processing function control, on the target audio, to obtain the processed target audio.

8. The method according to claim 7, wherein the presenting, in response to the audio processing instruction, the one or more audio processing function controls comprises:
presenting, in response to a touch-control operation on a sixth control on a fourth interface, the one or more audio processing function controls or a seventh control associated with the one or more audio processing function controls, wherein the seventh control is configured to trigger presentation of the one or more audio processing function controls on a fifth interface.

9. The method according to claim 7, wherein the presenting, in response to the audio processing instruction, the one or more audio processing function controls comprises:
presenting, in response to a sliding operation on a fourth interface, the one or more audio processing function controls or a seventh control associated with the one or more audio processing function controls, wherein the seventh control is configured to trigger presentation of the one or more audio processing function controls on a fifth interface.

10. The method according to any one of claims 7 to 9, wherein the audio processing function controls comprise:
an audio optimization control configured to trigger editing of audio to optimize the audio;
an accompaniment extraction control configured to trigger extraction of a vocal and/or an accompaniment from audio;
a style synthesis control configured to trigger extraction of vocal from audio and mixing and editing of the extracted vocal with a preset accompaniment;
an audio mashup control configured to trigger extraction of vocal from first audio, extraction of an accompaniment from second audio, and mixing and editing of the extracted vocal with the extracted accompaniment.

11. The method according to any one of claims 7 to 10, further comprising: displaying the processed target audio on a sixth interface, wherein the sixth interface comprises an eighth control, and the eighth control is configured to trigger playing of the processed target audio.

12. The method according to claim 11, wherein the sixth interface further comprises a ninth control, and the method further comprises:
displaying, in response to a touch-control operation on the ninth control on the sixth interface, a first window, wherein the first window comprises a cover import control, one or more preset static cover controls, and one or more preset animation effect controls;
acquiring, in response to a control selection operation on the first window, a target cover;
wherein the target cover is a static cover or a dynamic cover.

13. The method according to claim 12, wherein if the target cover is the dynamic cover, the acquiring, in response to the control selection operation on the first window, the target cover comprises:
acquiring, in response to the control selection operation on the first window, a static cover and an animation effect;
generating, according to an audio characteristic of the processed target audio and the static cover and the animation effect, a dynamic cover that changes with the audio characteristic of the processed target audio;
wherein the audio characteristic comprises audio tempo and/or volume.

14. The method according to any one of claims 7 to 13, wherein the method further comprises:
exporting, in response to an export instruction on a sixth interface, data associated with the processed target audio, to a target location, wherein the target location comprises an album or a file system.

15. The method according to any one of claims 7 to 14, wherein the method further comprises:
sharing, in response to a sharing instruction on a sixth interface, data associated with the processed target audio, to a target application.

16. The method according to claim 14 or 15, wherein the data associated with the processed target audio comprises at least one of:
the processed target audio, the vocal, the accompaniment, a static cover of the processed target audio, and a dynamic cover of the processed target audio.

17. An audio processing apparatus, comprising:
an acquiring module, configured to acquire, in response to an audio acquisition instruction, to-be-processed audio;
a processing module, configured to perform, in response to an audio extraction instruction for the to-be-processed audio, audio extraction on the to-be-processed audio, to obtain target audio, wherein the target audio is a vocal and/or an accompaniment extracted from the to-be-processed audio; and
a presenting module, configured to present the target audio.

18. An electronic device, comprising: a processor and a memory;
wherein the memory stores a computer-executed instruction; and
the processor executes the computer-executed instruction stored in the memory, to cause the processor to execute the audio processing method according to any one of claims 1 to 16.

19. A computer-readable storage medium, wherein a computer-executed instruction is stored in the computer-readable storage medium, and when the computer-executed instruction is executed by a processor, the audio processing method according to any one of claims 1 to 16 is implemented.

20. A computer program product, comprising a computer program, wherein when the computer program is executed by a processor, the method according to any one of claims 1 to 16 is implemented.

21. A computer program, wherein when the computer program is executed by a processor, the method according to any one of claims 1 to 16 is implemented.
